Europäisches Patentamt

European Patent Office

Office européen des brevets

(11) Publication number: **0 414 026 A2**

# EUROPEAN PATENT APPLICATION

(21) Application number: 90115061.5

(22) Date of filing: 06.08.90

(51) Int. Cl.⁵: **B60C 9/18**, B60C 9/20

(30) Priority: 24.08.89 US 398002

(43) Date of publication of application:
27.02.91 Bulletin 91/09

(84) Designated Contracting States:
**DE FR GB GR IT SE**

(71) Applicant: **Jefferson, Robert E.**
11826 Cindlewick Road South
DeMotte, Indiana 46310(US)

(72) Inventor: **Jefferson, Robert E.**
11826 Cindlewick Road South
DeMotte, Indiana 46310(US)

(74) Representative: **Flosdorff, Jürgen, Dr.**
Alleestrasse 33
D-8100 Garmisch-Partenkirchen(DE)

(54) **Improved belt structure for belted pneumatic tires.**

(57) An improved belt structure, particularly suited to steel belted radial truck tires for highway use, is disclosed. The improvement comprises providing at least one corrugated belt or ply. The corrugations comprise radially inward depending, circumferentially extending depressions in at least one belt. The depressions are radially aligned with the grooves in the tire tread, and thereby form arches to transfer stress away from the portion of the tread underlying the grooves to the solid portion of the tread between grooves. The improvement of the invention is believed to reduce or eliminate excessive wear and nipping of tread corner edges adjacent the tread grooves.

Fig.1.

## BACKGROUND OF THE INVENTION

This invention relates to pneumatic tires far vehicles, and more particularly to belted tires. The invention is most applicable to steel belted, radial truck tires.

Steel belted radial truck tires which are subjected primarily to interstate highway driving conditions exhibit a particular tread wear pattern, wherein the edges of the tread adjacent the tread grooves are rapidly worn or nipped off. This rapid wearing or nipping reduces tread life and contributes to deposit of undesirably large quantities of synthetic rubber particles along the highways.

This rapid wear or nipping problem is believed to be caused by minor buckling in or deflection of the tire belt structure adjacent the tread grooves. The deflection causes the portion of the tread between grooves to twist, placing increased stress on the edge of the tread. The increased stress on the edge of the tread in turn causes the aforementioned rapid wear or nipping.

Summary of the Invention

It is the object of the invention to provide an improved tire construction that reduces or eliminates the undesirable deflection or buckling of the belt structure of a belted tire adjacent the tread grooves, and accordingly reducing or eliminating the aforementioned rapid wear or nipping of the edge portions of the tire tread.

The objective of the invention is achieved by reinforcing circumferential portions of at least one of the belts in the area underlying the tread grooves. In the preferred embodiment, the reinforcing is accomplished by providing a corrugated belt or ply. The corrugted belt comprises radially inward depending, circumferentially extending depressions. The radially inward depressions of the corrugated belt are radially aligned with each tread groove. Accordingly, each depression acts as an arch to transfer stress from the area underlying the tire grooves to the solid portion of the tread between grooves. It is believed that the foregoing corrugated belt structure will decrease or eliminate twisting of the tread portion between grooves, and will reduce rapid edge wear or nipping.

Description of the Drawings

Fig. 1 is a diagrammatic cross-section through a belted pneumatic tire showing the corrugated belt structure according to the present inventions;

Fig. 2 is an enlarged cross-sectional detail of the crown region of the tire carcass, belt structure and tread of a belted pneumatic tire showing the belt structure according to the present invention.

Fig. 3 is a diagrammatic cross-sectional detail of the tread portion of the tire, typical of the prior art, showing rapid wear or nipping of the edge portion of the tread adjacent the tread grooves.

Detailed Description

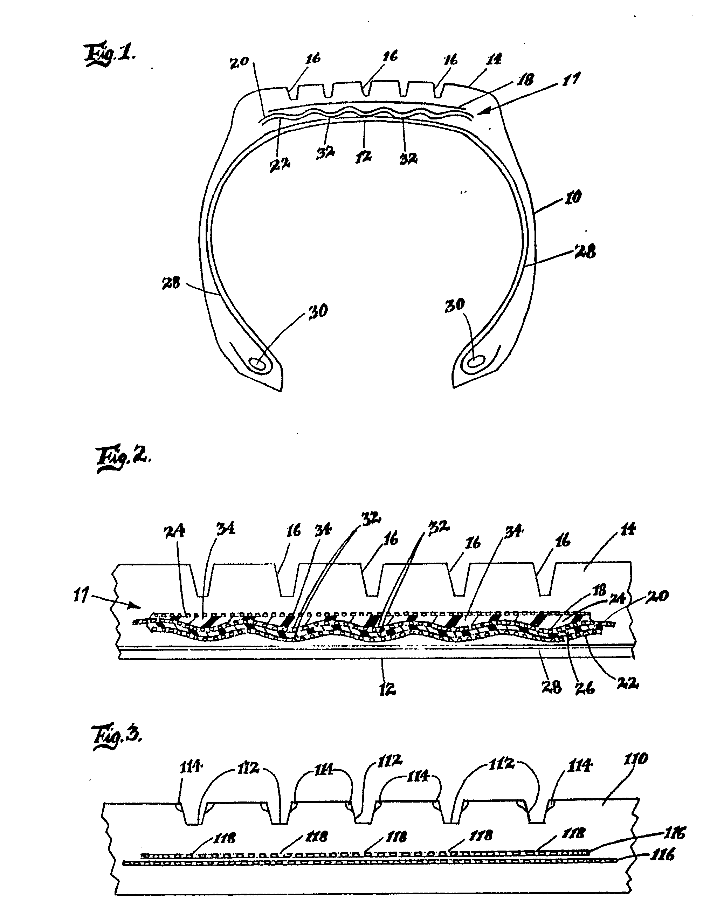

Referring now to the drawings, Fig. 3 shows a diagrammatic detail of a typical truck tire tread 110. The tread 110 has grooves 112. The corner edges 114 of the tread adjacent the grooves are shown as having been subjected to rapid wear or nipping. The edge wear 114 ig believed to be caused by deflections in the tread reinforcing belts or plies 116 in the area underlying the tread grooves 118. It is the object of the invention to reduce or eliminate this problem.

Figs. 1 and 2 illustrate the improved belt or ply structure of the pregent invention. A toroidal tire carcass 10 is shown having a crown region 12. Surrounding the carcass crown region is a tread 14. The tread 14 has a plurality of grooves 16 therein. Circumferentially disposed over the crown region 12, underlying the tread 14 is a belt structure 11. The belt structure comprises at least one, but typically several belts. Figs. 1 and 2 show three belts 18, 20 and 22. In between the belts, rubberized bonding layers 24 and 26 are provided. A radial ply 28 and beads 30 are shown for reference.

Turning now particularly to Fig. 2, in accordance with the present invention, belts 20 and 22 are corrugated. The corrugations comprise radially inward depending, circumferentially extending depressions 32 in the belts 20 and 22. Each depression 32 is radially aligned with a tread groove 16. The depressions form arches to transfer stress away from the area of the tread underlying the grooves 16 to the solid portion of the tread between grooves 16.

Different tread patterns incorporate tread grooves of varying widths. And, most tread patterns are not linear, but zigzag. Depending on the particular tread pattern desired, the centerline of each depression 32 should be radially aligned with the centerline of the corresponding groove 16. And, each depression 32 should be sufficiently wide to bridge the transverse dimension of the corresponding groove.

The depressions 32 in belts 20 and 22 may be formed by providing a bonding layer 24 with preformed ridges 34, depending radially inward and extending circumferentially of the carcass crown 12. Each ridge 34 corresponds in shape and location to the desired depressions 32 in belts 20 and 22.

Although three belts have been shown in the drawings, two corrugated, one not, it is to be understood that in accordance with the present invention, only one belt is required. Furthermore, it is not strictly necessary to corrugate all or even most of the belts in a plural belt structure. As shown in Figs. 1 and 2, it is thought to be desirable to have at least one belt, preferably the outer most belt, flat. It is believed that it is desirable to corrugate the radially inner most belts. However, it should be understood that employment of a single corrugated belt is within the scope of the present invention.

Figs. 1 and 2 show five tread grooves 16 and five corresponding depressions 32. A different number of grooves and corresponding depressions are contemplated by the present invention. It is also within the contemplation of the invention to provide depressions underlying some, but not all of the tread grooves. The edge wear or nipping conditions discussed above are more prevalent on the outer tread grooves than the inner grooves. Nipping also appears to be more prevalent at relatively wider grooves, than at narrow grooves. Accordingly, within the scope of the present invention, one may omit providing depressions underlying inner, narrow grooves.

While the preferred embodiment of the present invention has been shown and described, it is to be understood that various modifications and changes could be made thereto without departing from the scope of the appended claims.

## Claims

1. In a belted pneumatic tire having a toroidal carcass, a tread surrounding the crown region of said carcass, said tread having a plurality of substantially circumferential grooves therein, and at least one tread-reinforcing belt disposed circumferentially of the crown region of said carcass beneath said tread, the improvement comprising reinforcing a plurality of circumferential portions of at least one of said belts, each said portion being substantially radially aligned with a respective one of said grooves in said tread.

2. A belted pneumatic tire as in claim 1, wherein each of said reinforcing portions comprises a radially inward depending, circumferentially extending depression in said at least one of said belts, each said depression forming an arch over said respective groove in said tread.

3. In a belted pneumatic tire having a toroidal carcass, a tread surrounding the crown region of said carcass, said tread having a plurality of substantially circumferential grooves therein, and at least one tread-reinforcing belt disposed circumferentially of the crown region of said carcass beneath said tread, the improvement comprising a plurality of radially inward depending depressions extending circumferentially in at least one of said belts, each said depression being substantially radially aligned with a respective one of said grooves in said tread.

4. A belted pneumatic tire as in claim 3, wherein there is the same number of said depressions as said circumferential grooves in said tread, and each said depression is substantially radially aligned with a respective one of said grooves.

5. A belted pneumatic tire as in claim 3, said tire having a plurality of said tire-reinforcing belts, at least two of said belts having said plurality of radially inward depending depressions extending circumferentially, and said depressions of each said belt having depressions being in radial alignment with each other and with a respective one of said grooves in said tread.

6. A belted pneumatic tire as in claim 3, further comprising a circumferentially extending preformed layer radially outward from and overlying said at least one of said belts having depressions, said preformed layer having a plurality of circumferentially extending ridges depending in a radially inward direction, each said ridge being substantially radially aligned with a respective one of said grooves in said tread.

7. A belted pneumatic tire as in claim 3, said tire having a plurality of said tread-reinforcing belts, at least one of said belts having a substantially flat cross-section.

8. A belted pneumatic tire as in claim 7, wherein said belt having a substantially flat cross-section is the radially outer most belt.

9. In a belted pneumatic tire having a toroidal carcass, a tread surrounding the crown region of said carcass, said tread having a plurality of substantially circumferential grooves therein, said tire having an improved tire-reinforcing belt structure comprising a first circumferentially extending belt between said tread and said carcass, said first belt being substantially flat in cross-section; a circumferentially extending preformed layer radially inward from and underlying said first belt, said layer having a plurality of radially inward depending, circumferentially extending ridges, each said ridge being substantially radially aligned with a respective one of said grooves in said tread; and at least one second circumferentially extending belt radially inward from and underlying said preformed layer, said second belt having a plurality of radially inward depending, circumferentially extending depressions, each said depression corresponding to a respective one of said ridges in said preformed layer.

10. A belted pneumatic tire as in claim 9, wherein there is the same number of said depressions as said circumferential grooves in said tread, and each said depression is substantially radially aligned with a respective one of said grooves.

Fig.1.

Fig.2.

Fig.3.